Europäisches Patentamt

European Patent Office

Office européen des brevets

(11) Publication number: **0 091 667**
**A1**

## (12) EUROPEAN PATENT APPLICATION

(21) Application number: 83103411.1

(22) Date of filing: 07.04.83

(51) Int. Cl.³: **G 01 D 7/04**

(30) Priority: 08.04.82 IT 2150782 U

(43) Date of publication of application:
19.10.83 Bulletin 83/42

(84) Designated Contracting States:
AT BE CH DE FR GB IT LI LU NL SE

(71) Applicant: DUCATI ELETTROTECNICA SpA
Via Marco E. Lepido 178
I-40132 Bologna(IT)

(72) Inventor: Biondi, Astorre
Via Braglia 9 I-40017 San Giovanni in Persiceto
(Bologna)(IT)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Indicator panel for a central rephasing unit, particularly for industrial plants.

(57) An indicator panel for a central rephasing unit is equipped with graphic display means in the form of a cartesian diagram, replacing the conventioan needle gauges of known indicator panels. Associated with the cartesian diagram is a plurality of strips composed of individual segments adapted to be illuminated, such as by means of LEDs, for indicating the characteristic operating parameters of the rephasing unit. Indication of further parameters is furnished by graphic connections with and between the elements of the cartesian diagram.

EP 0 091 667 A1

./...

Indicator Panel for a Central Rephasing Unit,
particularly for Industrial Plants

Description

The present invention relates to an indicator panel capable of visually representing the characteristic parameters of a central rephasing unit, particularly for industrial plants.

It is known that in industrial establishments, wherein machinery capable of absorbing very high power potentials are in operation, it is important to maintain a correct phase relation between the available voltage and the absorbed current, or to maintain the so-called "$\cos \varphi$" as close as possible to the ideal unitary value. To this purpose it is known to employ central rephasing units equipped with capacitors for compensating the phase delay otherwise introduced by the machinery.

Also known is the importance of associating with the rephasing unit suitable indicator means capable of informing the operating personnel of the principal characteristic parameters of the unit as well as of the operating data permitting the operative state of the unit to be kept under control.

The present state of the art, mainly based on the employ of bulky and expensive dials with needle pointers, imposes on the designer of a unit of the type referred to to limit the number of the indicators to the strictly necessary, leaving the operating personnel with the task to obtain the lacking or insufficient indications by calculation and reference which are rather time-consuming and may be the cause of errors.

It is an object of the present invention to provide an indicator panel for a central rephasing unit which is capable of representing contemporaneously and with the greatest reading facility all of the principal characteristic parameters of the central unit.

Another object of the invention is the provision of an indicator panel for a central rephasing unit which is capable of representing with minimum delay and greatest facility of observation further useful data for the control of the operation of the unit.

In view of these objects, the principal characteristic of the indicator panel according to the ivention consists in that it comprises a graphic display in the form of a cartesian diagram and, disposed along the ordinate axis and along the negative abscissa axis of said cartesian diagram, respectively, a first and a second strip composed of segments illuminable for the indication of the active potential and of the capacitive reactive potential, respectively, there being provided a third strip composed of illuminable segments for indicating the phase shift angle, in which the ends of the individual segments are graphically connected to the center of said cartesian diagram by means of diagonals, the inclination of which corresponds to said phase shift angle.

It appears evident that with the indicator panel according to the invention, one not only obtains easily readable indications supplied by economic and compact indicator means such as said strips composed of illuminable segments, but these indications are also well organized within the frame of a cartesian diagram or in association therewith, serving to reproduce the same type of graphic representation which is normally employed for didactic and explanation purposes; the comprehension and combination of the various parameters is thus rendered extremely simple and free of errors. By the same token it is in addition possible to obtain in a purely graphic manner, i.e. without more or less complcated calculations, other parameters of interest, such as the reactive inductive potential which will evidnetly coincide with the axis of the positive abscissa, and the apparent potential which may be obtained by connecting the indication of the active potential with the indication of the phase shift angle by a line extending perpendicular to the ordinate axis and by thereafter displacing the connection point on the ordinate axis along a preferably pre-established circular arc having its center on the point of intersection of the axes of the cartesian diagram.

Other useful indications, always in the form of strips or other illuminable configurations, are preferably in addition provided for indicating other data such as the percentual deviation of the mains voltage from the nominal value and the type of operation executed by the capacitor battery at any given time.

In this manner, the operator has at his disposition a group of combined indications well organized within a small space for readily and speedily obtaining all of the values and data of interest.

For greater clarity, an example of a practical embodiment of the indicator panel according to the invention is illustrated in the single figure of the accompanying drawing, wherein the panel in its entirety is designated by the reference numeral 100.

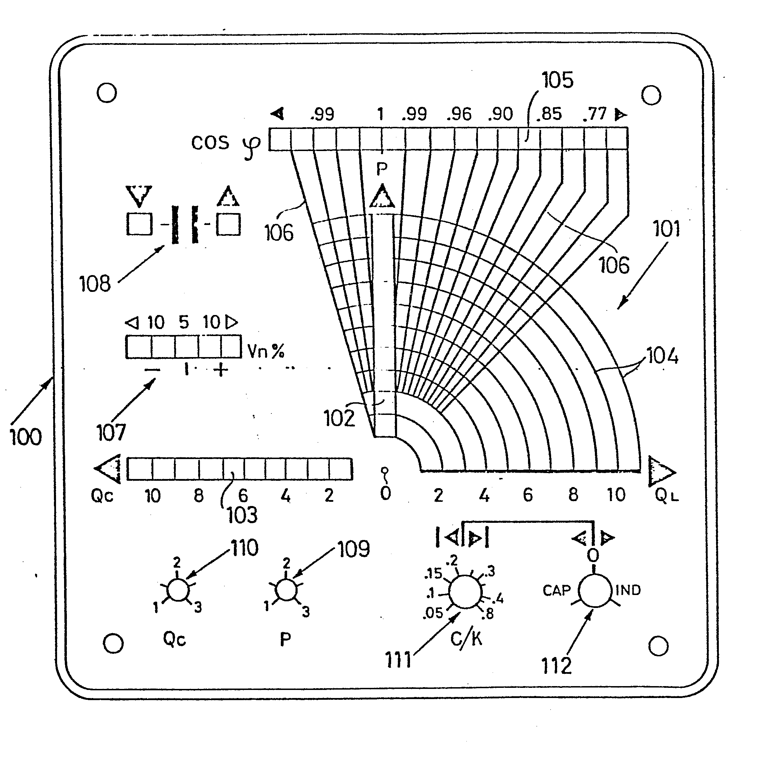

As its characteristic component, panel 100 comprises a graphic display in the form of a cartesian diagram 101 wherein, in accordance with common practice in the field of electrotechnique,the ordinate axis indicates the active potential P, the positive abscissa axis indicates the inductive reactive potential QL, and the negative abscissa axis indicates the capacitive reactive potential Qc.

Disposed along the ordinate axis P is a strip composed of illuminable segments 102 adapted to supply the requisite indication of the value of the active potential by the progressive illumination of its segments (proceeding from the one closest to the center 0 of the cartesian diagram.)

Disposed along the negative abscissa axis Qc is a further strip composed of illuminable segments 103 adapted to supply the requisite indication of the value of the capacitive reactive potential by the progressive illumination of its segments (proceeding from the one closest to the center 0 of the cartesian diagram.)

Drawn within cartesian diagram 101 are several circular arcs 104 having their common center on point 0 of the cartesian diagram, said arcs 104 passing through respective ends of the illuminable segments 102 of the strip indicating the active potential and having their ends adjacent the positive abscissa axis QL.

4

Exteriorly of cartesian diagram 101, but in association therewith, there is provided a further strip composed of illuminable segments 105 adapted to supply the requisite indication of the value of "cos $\varphi$ ", i.e. of the cosine of the phase shift angle by the selective illumination of one of its segments.

The ends of the individual segments of strip 105 are graphically connected to the center 0 of the cartesian diagram by diagonal lines 106 the inclination of which with respect to the ordinate axis P is equal to the phase shift angle represented by the respective segment. The purpose of the described diagonal lines will become evident as the description proceeds.

Laterallly of the cartesian diagram, and functionally separate therefrom, there are provided two further visual displays 107 and 108, the first of which is in the form of a strip composed of illuminable segments for indicating the percentual deviation Vn% of the mains tension from the nominal value, while the second one consists of the symbol of a capacitor with a pair of illuminable square windows associated with indicator arrows located on opposite sides thereof for indicating whether the capacitors are being charged or discharged at any given time.

There are finally provided two small buttons 109 and 110 for taring the scale base of the indication of the active potential and of the capacitive reactive potential, respectively, and two further buttons 111 and 112 for adjusting the sensibility of the measuring system and the sensibility band width thereof, respectively.

In operation, the illumination of one or more segments of strips 102 and 103 (making use of LED of a suitably selected colour) immediately supplies the operator with the requisite indication of the values of the active potential P and of the capacitive reactive potential Qc, and thus of the corresponding values of the active current and of the capacitive reactive current.

The illumination of one or the other of the segments of illuminable strip 105 (making use of LED of a different colour) supplies the

5

requisite indication of the value of cos $\wp$, or of the cosine of the phase shift angle. A possible intermittent illumination of a selected segment would be indicative of an abnormal functioning of the central unit.

The illumination of one or the other of the segments of illuminable strip 107 (making use of LED of a different colour) indicates the percentual deviation of the mains voltage from its nominal value.

The illumination of one or the other of the two small windows of visual display 108 indicates the actual operative state of the capacitor bank, i.e. whether the capacitors are being charged or discharged at any given time.

It is finally to be noted that by graphically connecting the indication of the active potential P (upper end of the brightest illuminated segment of strip 102) with the phase shift angle cos $\wp$ (diagonal 106 corresponding to the righthand end of the illuminated segment of strip 105) by means of a line extending perpendicular to the ordinate axis of the cartesian diagram, it is possible to directly obtain the values of the inductive reactive potential and of the apparent potential. In the first case it is sufficient to displace the connection point onto the positive abscissa axis along a line parallel to the ordinate axis,, while in the second case the connection point is shifted to the ordinate axis along the circular arc 104 passing though said point or closest thereto.

**0091667**

PATENTANWÄLTE
EUROPEAN PATENT ATTORNEYS

A. GRUNECKER, DIPL.-ING
DR. H. KINKELDEY, DIPL.-ING
DR. W. STOCKMAIR, DIPL.-ING.AEE (CALTECH)
DR. K. SCHUMANN, DIPL.-PHYS
P. H. JAKOB, DIPL.-ING
DR. G. BEZOLD, DIPL.-CHEM
W. MEISTER, DIPL.-ING
H. HILGERS, DIPL.-ING
DR. H. MEYER-PLATH, DIPL.-ING

8000 MÜNCHEN 22
MAXIMILIANSTRASSE 43

EP 997

Indicator Panel for a Central Rephasing Unit,
Particularly for Industrial Plants

Patent Claims:

1.      Indicator panel for a central rephasing unit, particularly for industrial plants, characterized in that it comprises a graphic display in the form of a cartesian diagram (101) and, extending along the ordinate axis and the negative abscissa axis of said cartesian diagram, respectively, a first and a second strip (102, 103) composed of segments adapted to be illuminated for indicating the active potential (P) and the capacitive reactive potential (Qc), respectively, there being provided a third strip (105) composed of segments adapted to be illuminated for indicating the phase shift angle, the ends of the individual segments of said third strip being graphically connected to the center (O) of said cartesian diagram by means of diagonal lines the inclination of which corresponds to said phase shift angle.

2. Indicator panel according to claim 1, characterized in that said cartesian diagram (101) includes a positive abscissa axis adapted to furnish indications of the inductive reactive potential.

3. Indicator panel according to claim 2, characterized in that said cartesian daigram includes a plurality of circular arcs (104) having their center at the intersetion point (O) of the axes of said diagram, said circular arcs extending at least from the ordinate axis to the positive abscissa axis of said diagram (101).

4. Indicator panel according to claim 1, characterized in that it comprises a fourth strip (107) composed of segments adapted to be illuminated for indicating the percentual deviation of the mains voltage from the nominal value.

5. Indicator panel according to claim 1, characterized in that it comprises manual control buttons (109 to 112) for taring the measuring system.

European Patent Office

**EUROPEAN SEARCH REPORT**

| | **DOCUMENTS CONSIDERED TO BE RELEVANT** | | EP 83103411.1 |
|---|---|---|---|
| Category | Citation of document with indication, where appropriate, of relevant passages | Relevant to claim | CLASSIFICATION OF THE APPLICATION (Int. Cl. ³) |
| A | <u>DE - B - 1 506 630</u> (DORNIER)<br>  * Fig. 2,3,6 *<br><br>-- | | G 01 D 7/04 |
| A | <u>DE - A1 - 2 624 885</u> (PORTESCAP)<br>  * Fig. 2, number 4 *<br><br>-- | | |
| A | <u>FR - A1 - 2 442 432</u> (SWF-SPEZIAL-<br>FABRIK FUR AUTOZUBEHÖR)<br>  * Fig. 1 *<br><br>---- | | |

TECHNICAL FIELDS SEARCHED (Int. Cl. ³)

G 01 D  7/00
G 01 D 13/00
G 01 R  1/00
G 01 R 25/00
G 06 K 15/00
G 09 B 25/00
G 12 B 11/00
H 02 B  1/00
H 02 B  9/00
H 02 B 15/00

The present search report has been drawn up for all claims

| Place of search | Date of completion of the search | Examiner |
|---|---|---|
| VIENNA | 11-07-1983 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82